Europäisches Patentamt

European Patent Office

Office européen des brevets

(19)

(11) Veröffentlichungsnummer: **0 208 646**
**B1**

(12) **EUROPÄISCHE PATENTSCHRIFT**

(45) Veröffentlichungstag der Patentschrift: **23.01.91**

(51) Int. Cl.⁵: **G 01 N 21/53**

(21) Anmeldenummer: **86630110.4**

(22) Anmeldetag: **02.07.86**

(54) Stationäres Tyndallometer.

(30) Priorität: **05.07.85 DE 3524118**
**05.07.85 DE 3524119**

(43) Veröffentlichungstag der Anmeldung:
**14.01.87 Patentblatt 87/03**

(45) Bekanntmachung des Hinweises auf die
Patenterteilung:
**23.01.91 Patentblatt 91/04**

(84) Benannte Vertragsstaaten:
**CH FR GB LI**

(56) Entgegenhaltungen:
**DE-A-2 051 546     DE-A-3 425 710**
**DE-A-2 260 313     DE-B-1 115 477**
**DE-A-2 521 433**

**TECHNOLOGY NEWS, Nr. 72, Oktober 1979, US;**
**"Improved respirable dust monitor"**

**Die Akte enthält technische Angaben, die nach**
**dem Eingang der Anmeldung eingereicht**
**wurden und die nicht in dieser Patentschrift**
**enthalten sind.**

(73) Patentinhaber: **Bergwerksverband GmbH**
**Franz-Fischer-Weg 61**
**D-4300 Essen 13 (DE)**

(72) Erfinder: **Armbruster, Lorenz**
**Am Vattersberg 7**
**4300 Essen (DE)**
Erfinder: **Neulinger, Gerold**
**Kohlestrasse 222a**
**D-4320 Hattingen (DE)**
Erfinder: **Fleckner, Klaus**
**Flurstrasse 134**
**D-4650 Gelsenkirchen (DE)**

(74) Vertreter: **Waxweiler, Jean et al**
**OFFICE DENNEMEYER S.à.r.l. P.O. Box 1502**
**L-1015 Luxembourg (LU)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine Vorrichtung zur Feinstaubmessung nach der Streulichtmethode im untertägigen Berg- und Tunnelbau und insbesondere in Abluft- oder Zuluftkanälen oder hinter Entstaubungsanlagen, mit einer stationären Streulichtmesskammer mit Signalausgang und die Innenwand durch einen Reinluftstrom schützenden Reinhaltevorrichtungen, sowie einer den Messwert verarbeitenden Zentralanlage.

Die Streulichtmethode zur Feinstaubmessung wird im untertägigen Berg- und Tunnelbau eingesetzt, weil sie gegenüber der gravimetrischen Methode den Vorteil hat, dass sie das Ergebnis sofort zur Verfügung stellt, auch als elektrisches Signal, das dann für Auswerte- und Regelungszwecke zur Verfügung steht. Derartige Vorrichtungen werden als Tyndallometer bezeichnet, die bisher fast ausschliesslich als tragbare Geräte zur Verfügung stehen, von daher also nur zur überwachenden Messung des Feinstaubes. Es gibt aber auch bereits Versuche, ein derartiges Streulichtfotometer zu einem stationären Gerät umzufunktionieren, wobei zur Sicherung des Messteils gegen Verschmutzung ein Reinluftstrom an der Innenwand der Messkammer vorbeigeführt wird. Dadurch wird es möglich, die Wartung in grösseren Zeitabschnitten durchzuführen, so dass ein derartiges stationäres Tyndallometer einen einigermassen kontinuierlichen Betrieb ermöglicht. Die Daten eines solchen Gerätes sind dann über Kabel einer Zentralanlage zugeführt worden und zur Schaltung von Düsenanlagen zur Staubbekämpfung eingesetzt worden. Die Versuchsergebnisse haben allerdings ergeben, dass eine solche Vorrichtung für Dauerbetriebe nicht geeignet ist, weil sie im Aufbau und in der Handhabung zu kompliziert und bezüglich der notwendigen Wartungen zu aufwendig ist. Insbesondere kommt es bei hoher Staubbelastung und bei Wassertropfenanfall zu erheblichen Schwierigkeiten, die eine häufige Wartung erfordern. Ausserdem entsprechen die Signalausgänge nicht der Bergbaunorm, so dass die Kopplung mit anderen Anlagen und Übertragungssystemen, wenn überhaupt, nur mit erheblichem Aufwand möglich ist.

Der Erfindung liegt die Aufgabe zugrunde, ein stationär und wartungsarm arbeitendes Staubmessgerät zu schaffen, über das gleichzeitig Staubbekämpfungsmassnahmen bzw. entsprechende Anlagen einzeln oder gleich gesteuert werden können.

Die Aufgabe wird erfindungsgemäss dadurch gelöst, dass die Streulichtmesskammer röhren- oder halbröhrenförmig ausgebildet ist und korrespondierend angebrachte und dem Einlauf bzw. dem Auslauf zugeordnete, parallel zur Innenwandung gerichtete Ringspaltdüsen aufweist oder ein Lochblech parallel zur Innenwandung aufweist, über das im Betrieb die von einer dem Einlauf zugeordneten Ringspaltdüse eingeführte Reinluft an mehreren Stellen austritt, dass der Sendertubus und der Empfängertubus, die der Streulichtmesskammer zugeordnet sind, über einen primärlichtführenden Lichtleiter mit mechanischem Unterbrecher verbunden sind und dass dem Empfänger der Streulichtmesskammer ein Vorverstärker zugeordnet ist, der über dem Kabel mit einem Hauptverstärker und einem Digitalteil mit Mikroprozessor verbunden ist.

Eine derartige Vorrichtung ist vorteilhaft auf die Bergbaubedingungen oder die besonderen Einsatzbedingungen zugeschnitten und eignet sich bestens, sowohl die notwendigen Feinstaubmessungen für Überwachungsmassnahmen wie auch für Steuerungsmassnahmen durchzuführen. Dabei wird über den Digitalteil mit einem Mikroprozessor eine Aufbereitung der Signale ermöglicht, die sowohl eine einwandfreie und vielschichtige Steuerung von Staubbekämpfungseinrichtungen wie auch die Messwertübertragung über grosse Entfernungen ohne weiteres sicherstellt. Die notwendige Nullpunktkontrolle und Kalibrierung ist vereinfacht, den besonderen Beanspruchungen angepasst und so ausgebildet, dass sie praktisch über den mechanischen Unterbrecher fernbedient werden kann. Dadurch wiederum ist es möglich, den Elektronikteil in grösserer Entfernung von der Messkammer anzuordnen, was gerade für die beabsichtigten Steuerungen von Staubbekämpfungseinrichtungen von erheblichem Vorteil ist.

Nach einer zweckmässigen Ausbildung der Erfindung ist vorgesehen, dass die Ringspaltdüsen einen der Geschwindigkeit des staubhaltigen Luftstroms kongruenten Reinluftstrom erzeugend ausgebildet sind. Dadurch ist sichergestellt, dass es im Bereich der Berührungsflächen beider Luftströme nicht zu Verwirbelungen und damit zu falschen Ergebnissen kommt. Dadurch, dass zwei Ringspaltdüsen vorgesehen sind, eine am Einlauf und eine am Auslauf der Messkammer, kann genau die Menge an staubfreier Luft, die durch die erste Ringspaltdüse eingespeist wird über die zweite Ringspaltdüse wieder abgesaugt werden, so dass sich ein sehr stabiler Reinluftmantel ergibt, der in seiner Wirkung sehr effektiv ist. Aufgrund dieses sehr stabilen Reinluftmantels kann eine Wartung im mehrwöchigen Abstand erfolgen, ohne dass sich an der Innenwand nennenswerte Staubablagerungen ergeben. Vorteilhaft ist weiter, dass für den Reinluftmantel nur geringe Luftmengen benötigt werden, weil durch die gezielte Ausbildung des Reinluftmantels auch bei den geringen Luftmengen eine ausreichende Stabilität gewährleistet ist.

Die für den Reinluftmantel benötigte Luftmenge wird vorteilhaft zur Verfügung gestellt, indem der dem Einlauf zugeordneten Ringspaltdüse ein kleinbauender, eigensicher ausgeführter Ventilator mit vorgeschaltetem Partikelfilter zugeschaltet ist. Letztlich kann dabei mit dem gleichen Aggregat Reinluft zugeführt und abgesaugt werden, so dass sowohl der Strombedarf wie auch der Platzbedarf für diese Einrichtung ausgesprochen gering ist.

Insbesondere dort, wo relativ hohe Windgeschwindigkeiten auftreten, beispielsweise beim Einbau derartiger Vorrichtungen in eine Luttenleitung oder in einem Zuluftkanal, ist es von Vorteil, wenn die Innenwandung der Streulichtmesskammer als Lochblech ausgebildet ist, deren Löcher einen Luftaustritt so ermöglichen, dass sich ausströmende Luft asymtotisch an die durch die Messkammer streichende staubhaltige Luft anlegt. Gerade bei den grösseren Windgeschwindigkeiten ist dies von Vorteil, weil dann über die Länge der Innenwandung gesehen an mehreren Stellen der Luftmantel durch neu eingeführte Reinluft stabilisiert wird. Die beschriebenen Messkammern sind röhrenförmig ausgebildet, so dass sich gerade der beschriebene Reinluftmantel günstig ausbilden und erhalten lässt.

Ist ein grosser Staubanfall zu erwarten, so kann es zweckmässig sein, die Streulichtmesskammer nach unten offen auszubilden, so dass die eintretende Sedimentation sich in der Messkammer nicht negativ bemerkbar machen kann. Dennoch ist die Ablagerung durch Turbulenzen nicht zu vermeiden, so dass eine derartige Messkammer schneller verschmutzt als die röhrenförmig ausgebildeten. Allerdings ist sie einfacher zu warten, so dass sich gerade bei den beschriebenen extremen Bedingungen, d.h. bei sehr staubhaltiger Luft, ein Einsatz als zweckmässig ergeben kann.

Durch Ablagerungen von Staub auf den optischen Bauteilen und an der Innenwandung verändern sich bekanntlich die optischen Eigenschaften des Systems, so steigt das Kammerrauschen an und die Durchlässigkeit der Linsen vor dem Sender und Empfänger verändert sich. Bei der dann erforderlichen Reinigung der Messkammer ergeben sich wiederum Änderungen, die die Einstellung des Gerätenullpunktes erfordern. Dieses wird bei den routinemässigen Wartungen vorgenommen, wobei diese Arbeiten dadurch erleichtert werden, dass erfindungsgemäss die der Streulichtkammer zugeordneten Sendertubus und Empfängertubus über einen Primärlicht führenden Lichtleiter mit mechanischem Unterbrecher verbunden sind, wobei der Lichtleiter ein Glaslichtleiter mit zugeordnetem mechanischem Unterbrecher ist. Diese Anordnung liefert eine konstante Anzeige auch bei Langzeitbetrieb und unterschiedlichen Temperaturen. Auftretende Abweichungen vom Sollwert können durch die Verwendung eines Glaslichtleiters erheblich reduziert werden, da diese gegen Temperaturschwankungen wenig empfindlich sind. Der Unterbrecher kann als mechanischer Drehschalter ausgelegt sein oder aber als ferngesteuerte Irisblende oder Kameraverschluss, so dass die Einstellung des Nullpunktes vorteilhaft vom in grösserer Entfernung zur Messkammer angeordneten Elektronikteil aus vorgenommen werden kann.

Dieser Elektronikteil bzw. der Digitalteil ist über ein Kabel mit der Messkammer verbunden, so dass der Signalaustausch unkompliziert ist. Vorteilhafterweise sind die für den Digitalteil benötigten Einzelteile in modularer Bauweise ausgeführt, so dass die einzelnen Elektronikgruppen sogar im Austausch verwendet werden können. Dadurch, dass dem Digitalteil ein Mikroprozessor zugeordnet ist, ist es möglich, die Momentanwerte ohne weiteres sofort anzuzeigen oder sie zu Mittelwerten zu verarbeiten, die einerseits jederzeit abgerufen werden können, andererseits aber vorteilhaft eine Grundlage für die Steuerung von Anlagen zur Staubbekämpfung bilden können. Zweckmässigerweise verfügt der Mikroprozessor hierzu über einen Analog-Digitalwandler und eine Digitalanzeige. Damit können die unterschiedlichsten Untersuchungen und Steuerungen vorgenommen werden, wobei es durch Zuordnung eines Tastenfeldes auch möglich ist, gewünschte parameter einzugeben, die dann die Mess- und Steuerungsabläufe beeinflussen und regeln. Zweckmässig kann dazu dem Mikroprozessor eine Geräte- und Anlagensteuerung nachgeschaltet werden.

Der technische Fortschritt der vorliegenden Erfindung ist insbesondere darin zu sehen, dass ein den besonderen Bedingungen angepasstes stationäres Tyndallometer geschaffen ist, das auch für längere Betriebszeiten ohne weiteres geeignet ist, da die Messkammer praktisch wartungsfrei arbeitet. Die Messkammer kann dabei unmittelbar beim Elektronik- bzw. Digitalteil oder aber in Entfernung dazu angeordnet sein, je nachdem, wie die untertägigen Gegebenheiten vorgefunden werden. Die ermittelten Signale, d.h. Messwerte, können als einzelne oder als addierte Mittelwerte zur Steuerung von Staubbekämpfungseinrichtungen oder auch anderen Anlagen verwendet werden.

Weitere Einzelheiten der vorliegenden Erfindung werden anhand der Zeichnungen weiter erläutert. Dabei zeigt

Fig. 1 eine schematische Darstellung des in Messkammer und Signalübertragung geteilten Staubmessgerätes,

Fig. 2 ein Blockschaltbild der Elektronik,

Fig. 3 eine schematische Darstellung des Staubmessgerätes mit Signalübertragungsteil und Messwertdokumentation,

Fig. 4—7 Blockschaltbilder der Elektronik für nachgeschaltete Mess-, Dokumentations- und Regeleinrichtungen,

Fig. 8 eine Messkammer im Schnitt, in zwei Ausbildungen,

Fig. 9 eine nach unten offene Messkammer und

Fig. 10 die Kalibriervorrichtung in einer vereinfachten Prinzipskizze.

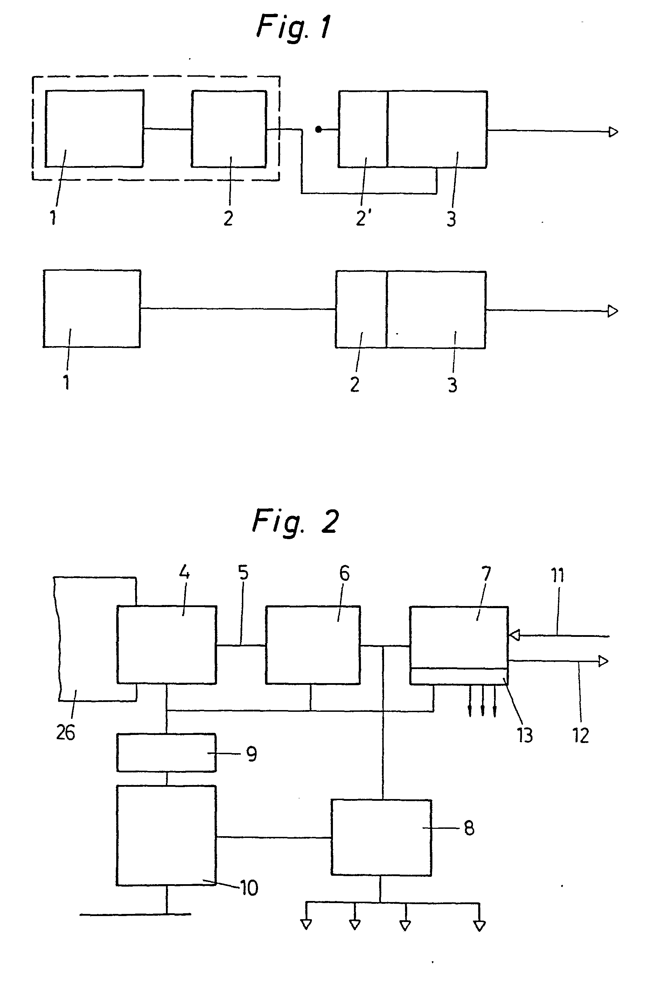

Das Staubmessgerät 1 ist bei Fig. 1 durch einen einfachen Kasten wiedergegeben und mit TM stationär bezeichnet, d.h. als stationäres Tyndallometer wiedergegeben. Mit 2 ist der UF-Wandler und mit 3 die Fernübertragungsanlage bezeichnet. Damit ist die Übertragung des Messwertes bei Ausgabe der Modulationsfrequenz bzw. bei Ausgabe des Analogwertes verdeutlicht.

Fig. 2 gibt das Blockschaltbild der erfindungsgemässen Elektronik wieder, wobei der Vorverstärker 4, wie angedeutet, dem Empfänger 26 des Staubmessgerätes 1 zugeordnet ist. Dieser Vorverstärker 4 ist über ein Kabel 5 mit dem Hauptverstärker 6 verbunden, der Teil des in einiger Entfernung zur Messkammer angeordneten Elektronikteils ist. Der Hauptverstärker 6 seinerseits ist mit dem Digitalteil 7 und zugeordnetem Mikroprozessor 13 verbunden. Er weist Steuereingänge 11 und Datenausgänge 12 sowie den speziellen Signalausgang 8 auf, der getrennt dazu als Modul vorgesehen ist. Uber den Signalausgang werden die Grenzwertgeber oder auch andere Bauteile angesteuert, und zwar in bergbaunormgerechter Form. Die Stromversorgung erfolgt über das untertägige Grubennetz, wobei die 0 bis 12 Volt und 0 bis 1 Ampere Stromversorgung mit 10 und die Spannungsanpassung mit 9 bezeichnet ist.

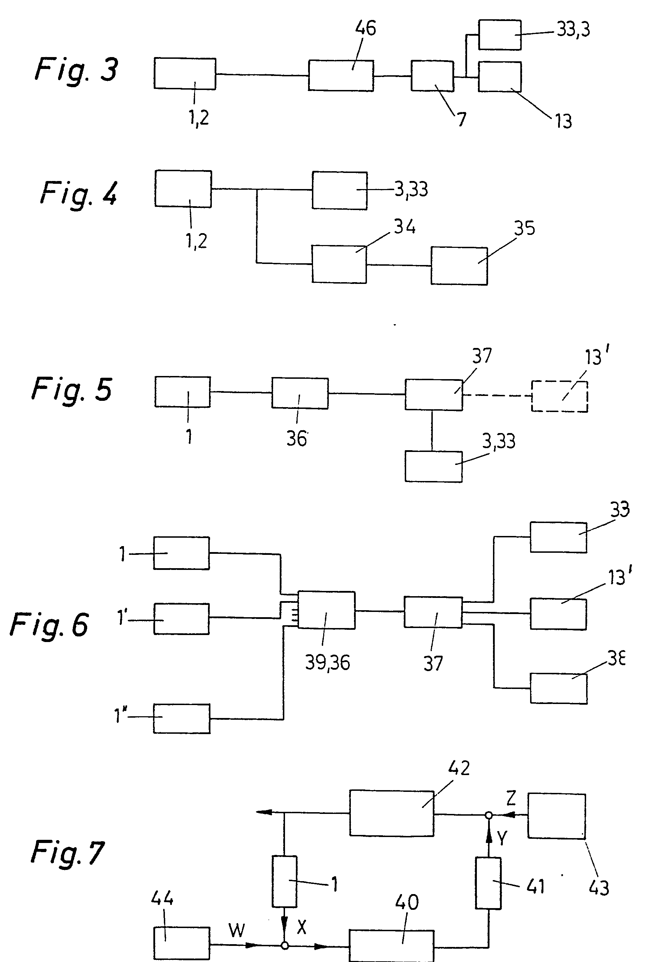

Während das in Fig. 3 gezeigte Schema ein Staubmessgerät 1 zeigt, das in Abluftkanälen, Zuluftkanälen, an Arbeitsplätzen mit hoher Staubbelastung, hinter Entstaubungsanlagen oder Luftfiltern angeordnet und mit konventionellen Dokumentationsgeräten 33 ausgerüstet ist, sind nach Fig. 4 zusätzlich zu den Dokumentationsgeräten 33, wie Schreiber oder Drucker, auch noch Grenzwertgeber 34 und Signal- und Warnanlagen 35 vorgesehen, die bei Niveauüberschreitung ansprechen. Fig. 5 zeigt die Anbindung eines Staubmessgerätes 1 an eine EDV-Anlage 37 über ein Interface 36 mit den EDV-typischen Dokumentationsmöglichkeiten. Zur Steuerung von Geräten und Anlagen kann ein Mikroprozessor 13 oder ähnliches vorgesehen werden.

Vielstellenmessanlagen 39 mit mehreren Staubmessgeräten 1, 1', 1'' werden gemäss einer Überwachungsstrategie nach Fig. 6 ausgebildet und mit Interface 36 und EDV-Anlage 37 kombiniert. Angeschlossen sind Dokumentations- 33 oder Steuergeräte 13' sowie eine Statusanzeige 38 der Anlage. Fig. 7 zeigt das Funktionsbild bei Verwendung des Staubmessgerätes 1 als Sensor in einem Regelkreis, beispielsweise für die Emissionskontrolle oder die Prozessüberwachung. Die Aufnahme und Verarbeitung der Messwerte erfolgt über das Staubmessgerät 1, dann wird der jeweilige Messwert mit dem vorgegebenen Niveau über die Stellgrösse 44 verglichen und über Stellglied 41, Regler 40 und Regelstrecke 42 mit Störgrösse 43 die Verstellung der Kenngrössen vorgenommen.

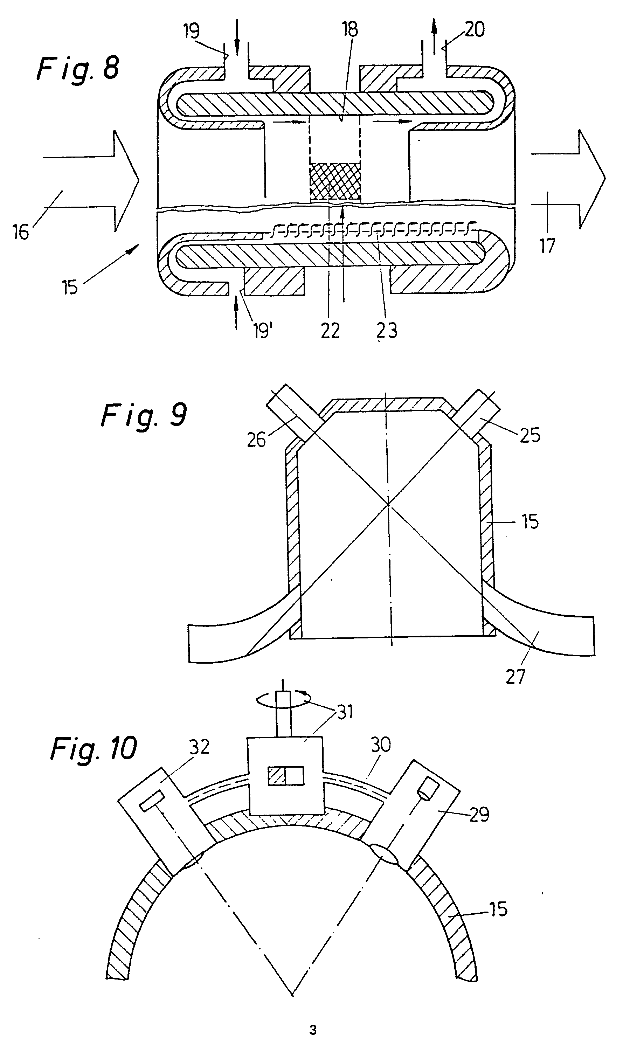

Die in Fig. 8 wiedergegebene Streulichtmesskammer 15 ist röhrenförmig ausgebildet und verfügt, wie üblich, über den Einlauf 16 und den Auslauf 17 für die staubhaltige Luft. Ausserdem wird bei der im oberen Teil wiedergegebenen Ausbildung über die Ringspaltdüsen 19 ein Reinluftstrom eingebracht, der gezielt an der Innenwandung 18 entlanggeführt wird, um hier Ablagerungen von Staub zu vermeiden. Dieser Reinluftstrom wird dadurch stabilisiert, dass im Bereich des Auslaufes 17 eine zweite Ringspaltdüse 20 angeordnet ist, über die die Reinluft wieder abgesaugt wird. Mittig der röhrenförmigen Streulichtmesskammer 15 liegt die Messzone 22, die gesondert markiert ist. Am unteren Bildrand ist eine zweite Ausbildungsmöglichkeit für die Reinhaltevorrichtung wiedergegeben. Hier ist parallel zur Innenwandung 18 ein Lochblech 23 vorgesehen, über das die von der Ringspaltdüse 19' eingeführte Reinluft über die Länge gesehen an mehreren Stellen austritt, um so den stabilen Reinluftmantel zu erzeugen. Diese Ausbildung ist insbesondere für hohe Wettergeschwindigkeiten vorgesehen und geeignet.

Fig. 9 zeigt eine nach unten offen ausgebildete Streulichtmesskammer 15, wobei der Sender mit 25 und der Empfänger mit 26 bezeichnet sind, die Lichtfallen mit 27 am unteren Ende der Streulichtmesskammer 15.

Die vereinfachte Kalibrierung wird anhand der Fig. 10 verdeutlicht. Hier ist gezeigt, dass über den Lichtleiter 30 Primärlicht aus dem Sendertubus 29 entnommen und über einen mechanischen Unterbrecher 31 in den Empfängertubus 32 geführt ist. Diese Anordnung erbringt konstante Anzeigen auch bei Langzeitversuchen und starken Temperaturveränderungen, beispielsweise zwischen 0 und 40°C. Hier haben sich Abweichungen von weniger als 10% vom Sollwert ergeben. Die Abweichungen sind noch geringer, wenn als Lichtleiter 30 ein Glaslichtleiter verwendet wird. Die gesamte Vorrichtung 29, 30, 31, 32 ist mit der Streulichtmesskammer 15 fest verbunden. Die Lichtleiter 30 sind gegen Positionsänderungen durch Erschütterungen oder Vibrationen gesichert. Der mechanische Unterbrecher 31 ist hier als mechanischer Drehschalter ausgelegt. Es ist auch möglich, ferngesteuerte Irisblenden oder einen Kameraverschluss einzusetzen, insbesondere dann, wenn der Elektronikteil in einer grösseren Entfernung von der Streulichtmesskammer 15 aufgebaut ist.

**Patentansprüche**

1. Vorrichtung zur Feinstaubmessung nach der Streulichtmethode im untertägigen Berg- und Tunnelbau und insbesondere in Abluft- oder Zuluftkanälen oder hinter Entstaubungsanlagen, mit einer stationären Streulichtmesskammer (15) mit Signalausgang und die Innenwand durch einen Reinluftstrom schützender Reinhalteeinrichtung, sowie einer den Messwert verarbeitenden Zentralanlage, dadurch gekennzeichnet, dass die Streulichtmesskammer (15) röhren- oder halbröhrenförmig ausgebildet ist und korrespondierend angebrachte und dem Einlauf (16) bzw. dem Auslauf (17) zugeordnete, parallel zur Innenwandung (18) gerichtete Ringspaltdüsen (19, 20) aufweist oder ein Lochblech (23) parallel zur Innenwandung (18) aufweist, über das im Betrieb die von einer dem Einlauf zugeordneten Ringspaltdüse (19') eingeführte Reinluft an mehreren Stellen austritt, dass der Sendertubus (29) und der Empfängertubus (32), die der Streulichtmesskammer zugeordnet sind, über einen primärlichtführenden Lichtleiter (30) mit mechanischem Unterbrecher (31) verbunden sind und dass dem Empfänger (26) der Streulichtmesskammer ein Vorverstärker (4) zugeordnet ist, der über dem Kabel mit einem Hauptverstärker (6) und einem Digitalteil (7) mit Mikroprozessor (13) verbunden ist.

2. Vorrichtung nach Anspruch 1, dadurch gekennzeichnet, dass die Ringspaltdüsen (19, 20) bzw. das Lochblech (23) derart ausgebildet sind, dass sie einen Reinluftstrom erzeugen, der die Geschwindigkeit des staubhaltigen Luftstroms aufweist.

3. Vorrichtung nach Anspruch 1, dadurch gekennzeichet, dass der dem Einlauf (16) zugeordneten Ringspaltdüse (19) ein kleinbauender, eigensicher ausgeführter Ventilator mit vorgeschaltetem Partikelfilter zugeschaltet ist.

4. Vorrichtung nach Anspruch 1, dadurch gekennzeichnet, dass die Innenwandung (18) der Streulichtmesskammer (15) als Lochblech (23) ausgebildet ist, deren Löcher einen Luftaustritt unter 45° ermöglichen.

5. Vorrichtung nach Anspruch 1, dadurch gekennzeichnet, dass die Streulichtmesskammer (15) nach unten offen ausgebildet ist.

6. Vorrichtung nach Anspruch 1, dadurch gekennzeichnet, dass der Lichtleiter (30) ein Glaslichtleiter mit zugeordnetem mechanischem Unterbrecher (31) ist.

7. Vorrichtung nach Anspruch 1, dadurch gekennzeichnet, dass der Mikroprozessor (13) über einen Analog-Digital-Wandler und eine Digitalanzeige verfügt.

8. Vorrichtung nach Anspruch 1, dadurch gekennzeichnet, dass dem Mikroprozessor (13) eine Geräte- und Anlagensteuerung (13') nachgeschaltet ist.

## Revendications

1. Dispositif de mesure des poussières fines par la méthode de diffusion de lumière, dans les exploitations minières du fond et le percement de tunnels, et, en particulier dans les conduits d'évacuation ou d'amenée d'air ou derrière des installations de dépoussiérage, dispositif comportant une chambre stationnaire de mesure de lumière diffusée (15), avec sortie de signal et dispositif de maintien de la pureté, qui protège la paroi interne au moyen d'un courant d'air purifié, et également avec une installation centrale pour exploiter la grandeur mesurée, caractérisé en ce que la chambre de mesure par diffusion de lumière (15), est réalisée de forme tubulaire ou demitubulaire et de façon adaptée en conséquence, et présente des buses à fente circulaire (19, 20) dirigées parallèlement à la paroi intérieure (18) et adaptées à l'arrivée (16) comme à la sortie (17) de l'air, ou bien présente une tôle perforée (23) parallèle à la paroi intérieure (18), par laquelle, en fonctionnement, l'air pur, introduit par une buse à fente circulaire adaptée à l'arrivée de l'air (19'), ressort à plusieurs endroits, en ce que le tube émetteur (29) et le tube récepteur (32), qui sont associés à la chambre de mesure par diffusion de lumière, sont reliés à un interrupteur mécanique (31) par l'intermédiaire d'un guide de lumière (30) amenant la lumière primaire, et en ce qu'au récepteur (26) de la chambre de mesure par diffusion de lumière est associé un pré-amplificateur (4), qui est relié, par le câble, avec un amplificateur principal (6) et un organe digital (7) à microprocesseur (13).

2. Dispositif suivant la revendication 1, caractérisé en ce que les buses à fente circulaire (19, 20), ou la tôle perforée (23), sont réalisées de façon à produire un courant d'air pur qui présente la vitesse du courant d'air chargé de poussières.

3. Dispositif suivant la revendication 1, caractérisé en ce qu'à la buse à fente circulaire (19) correspondant à l'entrée d'air (16), un ventilateur réalisé en version sécurité intrinsèque et miniaturisé, est raccordé avec un filtre à particules placé en amont.

4. Dispositif suivant la revendication 1, caractérisé en ce que la paroi interne (18) de la chambre de mesure de lumière diffusée (15) est réalisée sous la forme d'une tôle perforée (23), dont les trous permettent une sortie d'air sous 45°.

5. Dispositif suivant la revendication 1, caractérisé en ce que la chambre de mesure de lumière diffusée (15) est réalisée ouverte vers le bas.

6. Dispositif suivant la revendication 1, caractérisé en ce que le guide de la lumière (30) est un câble à fibre optique, comportant un interrupteur mécanique (31) associé.

7. Dispositif suivant la revendication 1, caractérisé en ce que le microprocesseur (13) dispose d'un convertisseur analogique-digital et d'un affichage digital.

8. Dispositif suivant la revendication 1, caractérisé en ce qu'après le microprocesseur (13), est branché une commande d'appareils et d'installations (13').

## Claims

1. Device for fine-dust measuring by the light-scatter method in underground mining and tunnel construction, and in particular in air-outlet or air-intake ducts or behind dust-removal devices, including a stationary light-scatter-measuring chamber (15) with signal output and a means for keeping the inside wall clean by way of a clean-air flow, as well as a central device for processing the measured value, characterised in that the scatter-light chamber (15) is arranged to be tubular or semi-tubular, with ring-gap nozzles (19, 20), directed parallel with the inner wall (18) and correspondingly mounted and associated with the input (16) or the outlet (17) respectively, or having a perforated sheet (23) parallel with the inner wall (18), through which during the operation clean air, entered by a ring-gap nozzle (19') in front of the inlet, exits in several places, that the transmitter tube (32) and the receiver tube (32), which are associated with the scatter-light-measuring chamber, are connected via a primary lightguide (30) to mechanical breaker (31), and that a pre-amplifier (4) is associated with the receiver (26) of the scatter-light-measuring chamber, which pre-amplifier is linked via the cable to a main amplifier (6) and a digital section (7) with microprocessors (13).

2. Device according to claim 1, characterised in that the ring-gap nozzles (19, 20) or the perforated sheet (23) respectively are arranged so that they create a clean-air flow with a speed equal to that of the dust-containing air flow.

3. Device according to claim 1, characterised in that the ring-gap nozzle (19) associated with the input (16) is a small, independently arranged ventilator with a particle filter arranged in front of it.

4. Device according to claim 1, characterised in that the inner wall (18) of the scatter-light-measuring chamber (15) is a perforated sheet (23), the perforations allowing air to exit under 45°.

5. Device according to claim 1, characterised in that the scatter-light-measuring chamber (15) is arranged to be downwardly open.

6. Device according to claim 1, characterised in that the lightguide (30) is a glass lightguide with associated mechanical breaker (31).

7. Device according to claim 1, characterised in that the microprocessor (13) includes a digital indicator by way of an analog-digital converter.

8. Device according to claim 1, characterised in that the microprocessor (13) has an equipment and device control (13') at its outputside.

*Fig. 1*

*Fig. 2*

Fig. 3

Fig. 4

Fig. 5

Fig. 6

Fig. 7

*Fig. 8*

19  18  20

16

15

17

19'  22  23

*Fig. 9*

26  25

15

27

*Fig. 10*

31

32  30

29

15